(19) Europäisches Patentamt
European Patent Office
Office européen des brevets

(11) **EP 4 636 733 A1**

(12) **EUROPEAN PATENT APPLICATION**

(43) Date of publication:
**22.10.2025 Bulletin 2025/43**

(21) Application number: **24170850.2**

(22) Date of filing: **17.04.2024**

(51) International Patent Classification (IPC):
**G08G 5/00** (2025.01)       **H04B 7/185** (2006.01)

(52) Cooperative Patent Classification (CPC):
**H04W 16/18; G08G 5/32; H04B 7/0617;
H04B 7/18504; H04W 16/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **NETWORK CONFIGURATION**

(57)    A computer-implemented method of configuring a network to provide network coverage for a mobile entity undertaking a mission is provided. The method comprises: receiving a mission definition file for the mobile entity, the mission definition file indicating a route along which the mobile entity will travel when undertaking the mission and a schedule for the mission; identifying a set of network nodes of the network for providing coverage to the mobile entity during the mission, each network node being associated with a respective portion of the route over which it is to provide network coverage to the mobile entity; determining a set of beam-forming configurations for one or more, or all, of the network nodes based on the mission definition file, each beam-forming configuration being associated with a respective network node and indicating a sequence of beam patterns for providing network coverage to the mobile entity as it travels along the respective portion of the route to be covered by that network node; and configuring the one or more, or all, of the network nodes according to the respective beam-forming configuration associated with that node to cause each network node to form a beam according to the sequence of beam patterns while the mobile entity travels along the respective portion of the route covered by that network node.

**Figure 6**

## Description

## Field of the Invention

The present invention relates to network configuration. In particular, it relates the configuration of beam-forming performed by nodes of a network to provide network coverage for a mobile entity undertaking a mission.

## Background to the Invention

The use of unmanned vehicles is growing rapidly and the range of fields within which such vehicles are being applied is ever increasing, especially in the case of unmanned aerial vehicles (or drones). Unmanned vehicles are vehicles which do not have an on-board driver and, in some cases, do not have any human being present within the vehicle. Unmanned vehicles can be programmed to carry out various operations autonomously without needing any human intervention. Increasingly, the use cases for unmanned vehicles are involving so-called Beyond Visual Line of Sight (BVLOS) operation, wherein the distance between an operator and the vehicle is large (such that the vehicle is not in the operator's sight). Commonly such use cases involve the unmanned vehicle travelling across a reasonably large geographic area. As a result, the vehicle is likely to also be beyond range of direct communication with an operator (who may also be referred to as a ground station). It is therefore common to make use of communications networks, such as radio access networks (e.g. 3G, 4G, 5G networks), to allow the operator to communicate with the vehicle in such scenarios. In addition to providing command and control of the vehicle for a remote operator, such communications networks may also be used to provide and/or receive data relating to the mission that the vehicle is undertaking. For example, a vehicle being used to carry out a survey of an area my provide high resolution imagery and/or associated survey data over the communications network.

Beamforming or beam-steering is a signal processing technique that allows for directional transmission or reception. This directional transmission is achieved by controlling the elements in an antenna array so as to cause a pattern of constructive and destructive interference that results in the transmitted signal being amplified in a certain direction and attenuated in other directions, resulting in a beam-shaped or lobe-shaped transmission emanating from the transmitter. Directional reception can be achieved by combining the information from different elements in an antenna array in a way so as to observe the radiation being received from a particular direction. More modern radio access networks (such as 5G networks) make use of large antenna arrays that are capable of performing beamforming operations.

The 5th Generation (5G) cellular telecommunications protocol, as standardised by the 3rd Generation Partnership Project (3GPP), defines the number of beams that may be transmitted by a base station as a function of the frequency. Four beams are used for communications below 3GHz, eight beams are used for communications between 3GHz and 6 GHz, and sixty-four beams are used for communications over 6GHz. Each beam has a unique coverage area characterized by its azimuth angle, elevation angle, depth and width. Typically, therefore each base station will be statically configured with a predefined set of beam patterns that may be used as required to provide service to mobile stations in its area of coverage.

A downlink synchronisation process is defined for User Equipment (UE) to identify which beam (or plurality of beams) of the base station to use for communications. In this downlink synchronisation process, the base station may transmit a particular beam of a plurality of beams in a corresponding timeslot. The UE reports the signal strength of each beam in its respective timeslot, and the beam (or beams) having the greatest signal strength are thereafter used for communications with the UE.

## Summary of the invention

In a first aspect of the invention, there is provided a computer-implemented method of configuring a network to provide network coverage for a mobile entity undertaking a mission, the method comprising: receiving a mission definition file for the mobile entity, the mission definition file indicating a route along which the mobile entity will travel when undertaking the mission and a schedule for the mission; identifying a set of network nodes of the network for providing coverage to the mobile entity during the mission, each network node being associated with a respective portion of the route over which it is to provide network coverage to the mobile entity; determining a set of beam-forming configurations for one or more, or all, of the network nodes based on the mission definition file, each beam-forming configuration being associated with a respective network node and indicating a sequence of beam patterns for providing network coverage to the mobile entity as it travels along the respective portion of the route to be covered by that network node; and configuring the one or more, or all, of the network nodes according to the respective beam-forming configuration associated with that node to cause each network node to form a beam according to the sequence of beam patterns while the mobile entity travels along the respective portion of the route covered by that network node.

Through this approach, the invention enables a network to be reconfigured so as to accommodate a mobile entity during a mission, thereby improving the communication capability available to the mobile entity.

The mission definition file may further indicate a respective network requirement for the mobile entity during one or more portions of the route. The method may further comprise determining whether a respective current configuration of each of the identified network nodes is able to satisfy the network requirements for the mobile entity as it travels along the respective portion of the route to be covered by that network node. Determining the set of beam-forming configurations may comprise determining a beam-forming configuration for each network node for which it is determined that the respective current configuration is not able to satisfy the network requirements for the mobile entity as it travels along the respective portion of the route to be covered by that network node, such that the network requirements for the mobile entity are met.

The respective network requirements for the one or more portions of the route may be implicitly indicated by one or more respective sensor requirements for the mobile entity during each of the one or more portions of the route.

At least one of the beam-forming configurations may be determined further based on network requirements of another mobile entity that will be using the respective network nodes associated with each of the at least one of the beam-forming configurations contemporaneously with the mobile entity.

Each beam pattern may be one of a static set of predefined beam patterns for the respective network node.

The method may further comprise providing a communications plan to the mobile entity, the communications plan indicating a respective specific beam of each beam pattern in the sequence of beam patterns that is to be used by the mobile entity while travelling along the respective portion of the route to be covered by each network node.

Each beam pattern in the sequence of beam patterns may define a custom beam directed at a location on the route covered by the network node.

The mobile entity may be an unmanned aerial vehicle.

In a second aspect of the invention, there is provided a computer system comprising a processor and a memory storing computer program code for performing a method according to the first aspect.

In a third aspect of the invention, there is provided a computer program comprising instructions which, when executed by a computer, cause the computer to carry out a method according to the first aspect.

In a fourth aspect of the invention, there is provided a computer-readable data carrier having stored thereon a computer program according to the third aspect.

In a fifth aspect of the invention, there is provided a data carrier signal carrying a computer program according to the third aspect.

In a sixth aspect of the invention, there is provided a network comprising a plurality network nodes for providing network coverage across a geographic area, the network comprising a controller arranged to configure one, or more, or all of the network nodes so as to provide network coverage for a mobile entity undertaking a mission by carrying out a method according to the first aspect.

## Brief Description of the Figures

Embodiments of the present invention will now be described by way of example only, with reference to the accompanying drawings, in which:

Figure 1 is a block diagram of a computer system suitable for the operation of embodiments of the present invention;

Figure 2 is a flowchart representation of a method of configuring a network to provide network coverage for a mobile entity undertaking a mission according to embodiments of the invention;

Figure 3 is a diagrammatic representation of an exemplary mission to be undertaken by a UAV.

Figure 4 is a diagrammatic representation of an exemplary portion of a network that may be involved in providing network coverage for the mission.

Figure 5 is a diagrammatic representation of a custom beam for providing network coverage to a specific point on the UAV's route through a coverage area of a network node.

Figure 6 is a diagrammatic representation of a sequence of custom beams for providing network coverage for the entirety of the UAV's route through the coverage area of the network node.

## Detailed Description of Embodiments

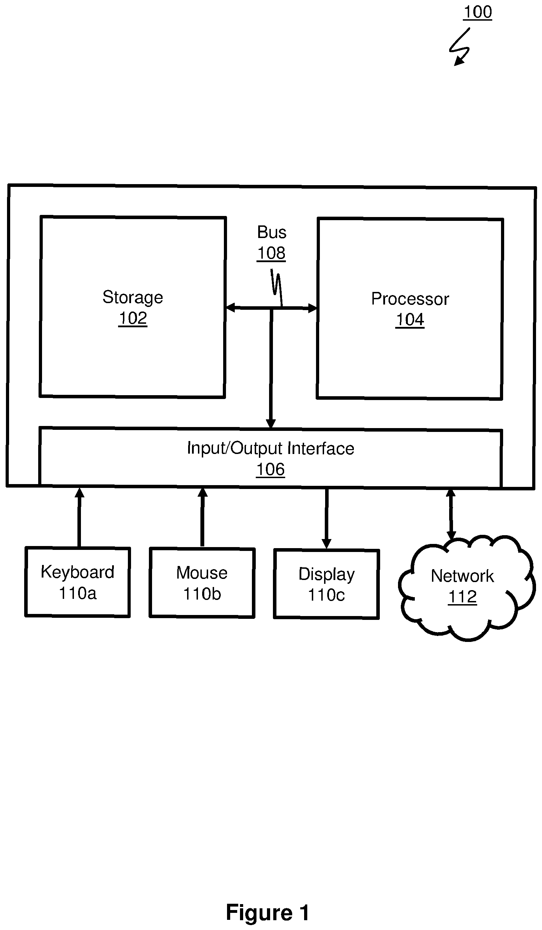

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 11 0c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

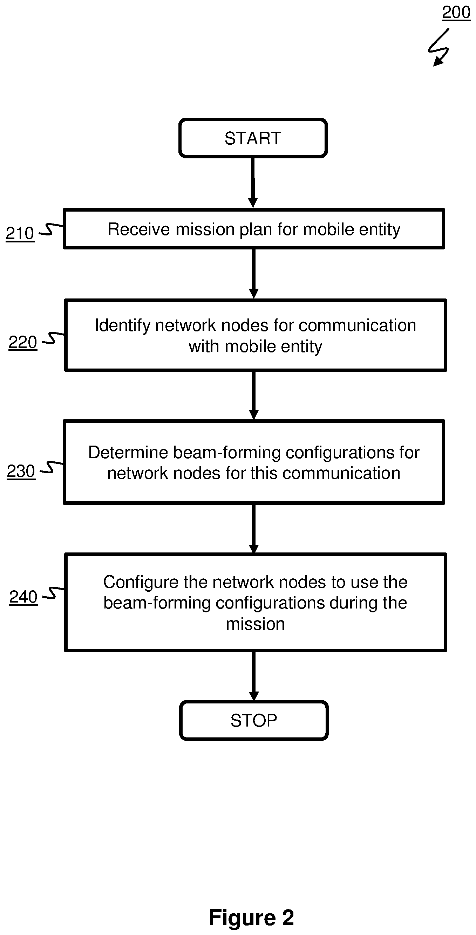

Figure 2 is a flowchart representation of a method 200 of configuring a network to provide network coverage for a mobile entity undertaking a mission according to embodiments of the invention. In the following discussion of the invention, the mobile entity will be an unmanned aerial vehicle (UAV) (or drone). However, it will be appreciated that in other cases different types of mobile entities, such as unmanned ground vehicles (UGVs), may be used instead of or in addition to the use of UAVs. Similarly, although the invention is primarily described in relation to unmanned vehicles, it will be appreciated that it is also possible for the invention to be beneficially applied to the provision of network coverage for manned vehicles. The method 200 begins at an operation 210.

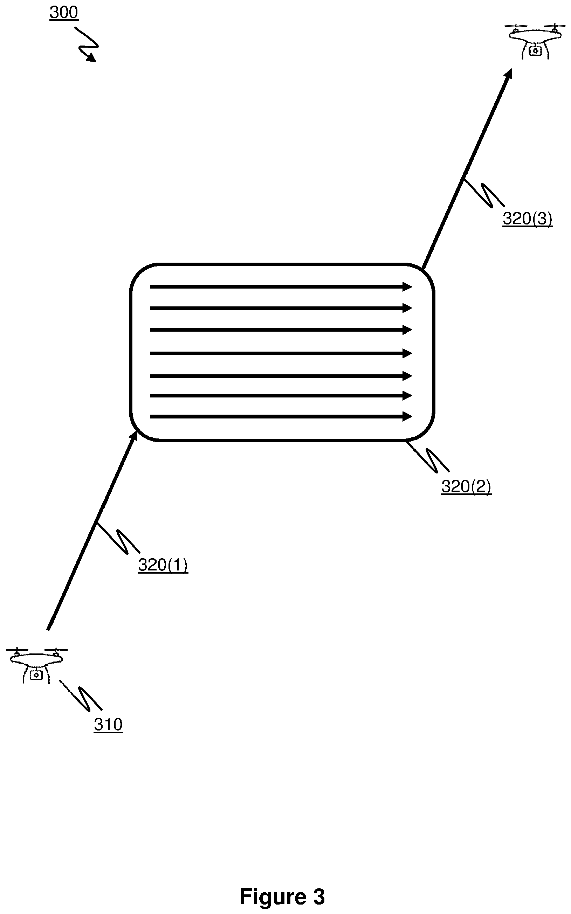

At operation 210, the method 200 receives a mission definition file (or mission plan) for a UAV. Figure 3 is a diagrammatic representation of an exemplary mission 300 to be undertaken by the UAV 310. The mission definition file that is received provides details of this mission, including an indication of a route 320 (or path) along which the UAV 310 will travel when it is undertaking the mission. In some cases, the mission definition file may also indicate network requirements for the UAV 310 during the mission 300. In some such cases, these network requirements may be explicitly expressed in the mission definition file, for example, as a required level of bandwidth, latency and jitter for the UAV 310. In other such cases, these network requirements may be implicitly expressed in the mission definition file. For example, the mission definition file may specify various sensor requirements (such as, taking a picture using a particular camera sensor, switching on of a LIDAR sensor, starting video surveillance using a video sensor, or capturing enhanced telemetry) of the UAV 310 at different times on the mission 300. Pre-existing knowledge of the network requirements for satisfying the transmission of sensor data from each type of sensor can be used to convert each sensor requirement into a corresponding network requirement.

There are a variety of ways in which the route 320 can be indicated in the mission definition file and any suitable technique may be used. As an example, the route may be defined as a sequence of way points and standard paths, such as point-to-point paths, taken by the UAV 310 between those waypoints. In some cases, the mission definition file may be expressed according to a standardised specification (or format) such as Keyhole Markup Language (KML) or Micro Air Vehicle Link (MAVLink).

The mission 300 for the UAV 310 may be broken up into different phases. For example, in a first phase, the UAV 310 may travel along a first portion of the route 320(1) to travel to an area for which it is to carry out a survey. Then, in a second phase, the UAV 310 may travel along a second portion of the route 320(2) representing a sweep pattern to cover the area for which it is to carry out a survey. Then, in a third phase, the UAV 310 may travel along a third portion of the route 320(3) to leave the area for which it is to carry out a survey (perhaps, in some cases, to return to its base or, in other cases, to travel to a point for carrying out a subsequent mission). Each of the phases of the mission may have different network requirements. For example, the network requirements for travelling to and from the area to be surveyed in the first and third phases may be lower, only requiring sufficient bandwidth and latency to allow the UAV 310 to be piloted (or supervised, where the UAV is autonomous or semi-autonomous). Accordingly, in those phases, only command and control data, with some telemetry, possibly including limited video feeds may be required. Meanwhile, the network requirements when carrying out the survey during the second phase may be higher, with the additional requirement to transmit the survey data, which may in some cases comprise a large amount of data (e.g. high quality imagery and other large data sets). These differences in network requirements for the different phases of the mission 300 may be indicated in the mission definition file. That is to say, the mission definition file may include an indication of a respective network requirement for the mobile entity during one or more portions of the route 320 that correspond to the different phases of the mission 300.

In addition to specifying the geographical geometry of the route the mission definition file also provides an indication of a schedule for the mission. That is to say, the mission definition file provides information regarding the timings at which the UAV 310 will undertake different parts of the route 320. Some, or all, of this timing information may be provided in relative terms. That is to say, the timing information may provide information about the time it will take for the UAV 310 to travel between different points on the route 230. This timing may be explicitly indicated or implicit (e.g. through the indication of the velocity at which the UAV 310 will be travelling along various portions of the route 230). This relative timing information can be combined with limited absolute timing information in order to determine an absolute time at which the UAV 310 will be at each point on the route 230. For example, the mission definition file may explicitly state the start time of the mission. In some cases, the mission definition file may only contain relative timing information (i.e. no absolute time information, such as a mission start time may be included in the mission definition file). Instead, a notification may be subsequently provided (e.g. by the UAV 310 or its controller) when the mission starts (or is about to start at some point in the near future). This notification may then be used together with the relative timing information in the mission definition file to determine the absolute times at which the UAV 310 will be at each point on the route 230. In other cases, the mission definition file may only contain absolute timings that the UAV 310 will be at various points on the route 320 (with interpolation being used to infer timings for intermediate points along the route 320 where necessary).

The method 200 may be performed by any suitable computer system, such as computer system 100, that is able to configure the network that is to provide coverage to the UAV 310. This computer system may be referred to as a network configuration controller. The mission definition file may be provided to the network configuration controller by the UAV 310, or by another computer system on behalf of the UAV 310 via one or more networks. In some cases, the one or more networks include the network that is being configured by the network configuration controller. However, in other cases, the mission definition file may be received via one or more other networks that are different than the network being configured by the network configuration controller.

Having received the mission definition file for the UAV 310, the method 300 proceeds to an operation 220.

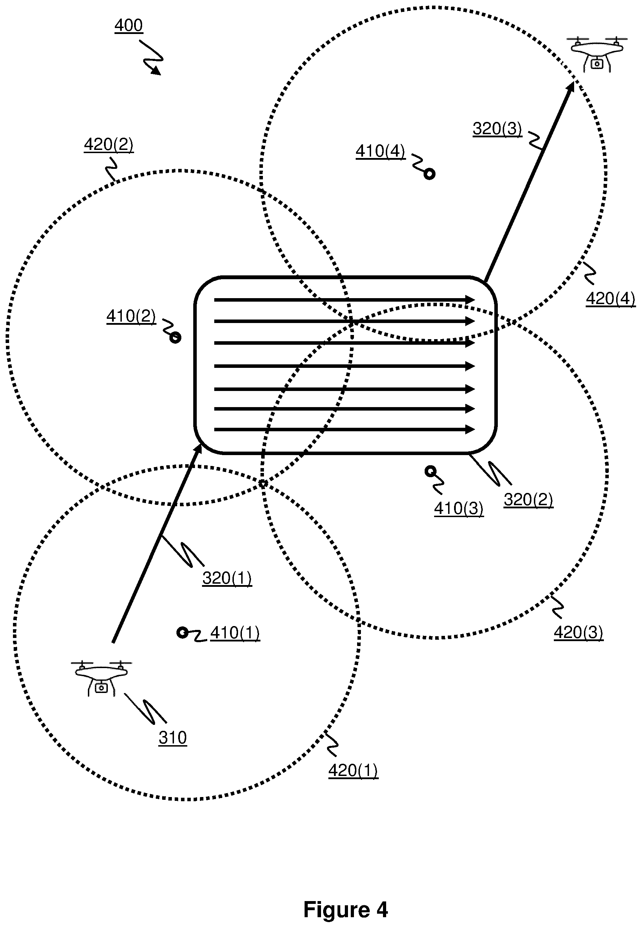

At operation 220, the method 200 identifies a set of network nodes of the network for providing network coverage to the UAV 310 during its mission 300. Figure 4 is a diagrammatic representation of an exemplary portion 400 of a network that may be involved in providing network coverage for the mission 300. In this example shown in figure 4, there are four network nodes 410 (or base stations or cells) that have been identified for providing network coverage to the UAV 310 during its mission 300. Each of the network nodes 410 has a respective area 420 for which it able to provide network connectivity (or coverage). Each node 410 is therefore able to provide network coverage for the UAV 310 during the portion(s) of the route 320 that are within its area of coverage 420. Accordingly, different portions of the route 320 may be covered by different respective network nodes 410. In this example, a first network node 410(1) may provide network coverage for a first part (or portion) of the route 320 that is within a first coverage area 420(1) associated with the first network node 410(1), a second network node 410(2) may provide network coverage for a second part (or portion) of the route 320 that is within a second coverage area 420(2) associated with the second network node 410(2), a third network node 410(3) may provide network coverage for a third part (or portion) of the route 320 that is within a third coverage area 420(3) associated with the third network node 410(3) and a fourth network node 410(4) may provide network coverage for a fourth part (or portion) of the route 320 that is within a fourth coverage area 420(4) associated with the fourth network node 410(4).

As will be appreciated, there is some overlap between the different coverage areas 420 provided by the network nodes 410. Accordingly, identification of the set of network nodes for providing network coverage to the UAV 310 during its mission 300 may involve determining at which point on the route 320 within an overlapping area of coverage, the provision of network coverage should be transferred from one network node 410 to another. This may generally be determined based on level of service that is able to be provided by each network node 410 at the various points within the overlapping area of coverage.

Although only four network nodes 410 are shown in figure 4, it will be appreciated that in other cases, other numbers of network nodes 410 may be used to provide network coverage to the UAV 310 during its mission 300. In some cases, the same network node 410 may be involved in providing network coverage for multiple distinct portions of the route 320 (i.e. where the route 320 traverses the area of coverage 420 for the network node 410 multiple distinct times). Furthermore, the network may comprise any number of other network nodes 410 that are not involved in the provision of network coverage for a UAV 310 during its mission 300 (i.e. which are not identified by operation 220).

It should be noted that the portions of the route associated with respective network nodes 410 need not correspond to the portions of the route for which the UAV's network requirements. Accordingly, where network requirements have been specified for the UAV 310 in the mission definition file, the portion of the route 320 for which a particular network node 410 is to provide coverage may have different network requirements applied to different sub-portions of that portion of the route 320.

Having identified a set of network nodes 410 of the network for providing network coverage to the UAV 310 during its mission 300, the method 200 proceeds to an operation 230.

At operation 230, the method 200 determines a set of beam-forming configurations for one or more, or all, of the network nodes that were identified in operation 220 for providing network coverage to the UAV 310 during its mission.

The beam-forming configurations are determined based on the mission definition file. In particular, the beam-forming configurations are determined so as to provide a suitable level of network coverage for the UAV along the route 320 that it will travel during its mission 300. That is to say, each of the beam-forming configurations indicates a sequence of one or more beam patterns for providing network coverage to the UAV 310 as it travels along the respective portion of the route 320 to be covered by the associated network node 410.

The beam-forming configurations indicate, for each beam pattern, an associated portion of the route 320 for which that beam pattern is to be used by the network node 410 to provide network coverage to the UAV 310. This means that the network node 410 (or a controller of the network node 410) can determine, at any given point which of the beam patterns should be used. The indication of the portion of the route 320 to which each beam pattern applies may be specified directly or indirectly. That is to say, in some cases, the portion of the route 320 to which a beam pattern applies may be directly specified in geometric terms. However, in other cases, the portion of the route 320 may be indirectly specified, for example, by providing specific timings (either absolute, or relative to a reference point such as the start time for the mission 300) for which the beam pattern should be used. Where the portion of the route 320 is indirectly specified, the network node 410 (or its controller) may use the timing information in the mission definition file to determine the appropriate time to operate according to each beam pattern.

In some cases, the beam-forming configurations may be determined so as to provide the best network coverage possible (taking into account the requirements of other users of the network). Accordingly, the method 200 may determine a sequence of beam patterns that provide the best network coverage to the UAV 210 as it travels along the respective portion of the route 320 covered by a particular network node 410. To do so, the method 200 may communicate with a network resource management system in order to determine what network resources (or requirements) have already been reserved for each of the network nodes 410 at the time that UAV 210 will be travelling along the respective portion of the route 320 covered by that network node 210. The method 200 can then determine what beam patterns will satisfy the pre-existing requirements of other network users whilst also optimising network connectivity for the UAV 210.

In other cases, where the mission definition file indicates network requirements for the UAV 310 during the mission 300, the method 200 may seek to provide a level of network coverage that meets these requirements as a minimum (as opposed to providing an optimal level of network coverage). Similarly, where network requirements for the UAV 310 are not provided, the method 200 may instead seek to provide a predetermined level of network coverage as a minimum (as opposed to providing an optimal level of network coverage).

In some cases, it may not be necessary to specify beam-forming configurations for all of the network nodes 410 identified during operation 220 in order to achieve the required level of network coverage across the entire route. For example, some of the identified network nodes 410 may be capable of satisfying the network requirements associated with their respective portion of the route 320 without needing any reconfiguration. The method 200 may therefore determine whether a current configuration of each of the identified network nodes (that is to say, a configuration of each of the network nodes 410 that is currently intended to be used at the time the UAV 310 is travelling along the respective portion of the route 320 covered by that network node 410) is able to satisfy the network requirements of the UAV 310 (or the predetermined minimum level of network coverage) for the portion of the route 320 covered by that network node 410. The method 200 may then determine beam-forming configurations for those network nodes 410 for which their respective current configuration is not able to satisfy the network requirements of the UAV 310 (or the predetermined minimum level of network coverage) for the respective portion of the route to be covered by the network node. These beam-forming configurations serve to reconfigure their associated network nodes 410 enhance the network connectivity at one or more locations on the route 320 so as to ensure that the network requirements of the UAV 310 (or the predetermined minimum level of network coverage) are met.

In determining the beam configuration for a network node 410, the method 200 may, in some cases, take into account the network requirements of other network users, such as other mobile entities for which the network is to be configured to provide network coverage for via the same method 200. Accordingly, where network requirements are known for one or more other mobile entities that will be active within the coverage are of a network node 410 at the same time as the UAV 310 travels along the portion of the route 320 covered by that network node 410, then the determined beam pattern for that network node may be one that meets the requirements of both the UAV 310 and the one or more other mobile entities.

In some cases, each of the beam patterns in a beam-forming configuration may be selected amongst a set of predefined static beam patterns that are available for use by the respective network node 410 for which a beam. For example, the beam patterns may be selected from amongst a predefined set of beam patterns that conform with the 5G cellular telecommunications protocol as described above. The method 200 may asses each of the available predefined beam patterns and determine which of those beam patterns provides the best network coverage for the UAV 310 or otherwise meets the network requirements of the UAV 310 or the predetermined minimum level of network coverage (as appropriate). This technique may therefore provide backwards compatibility with existing standards.

Having determined which of the predefined static beam patterns should be used by a particular network node 410 at any given point in time during the UAV's 310 journey along the portion of the route covered by that network node 410, the method 200 may determine which specific beam of a plurality of beams that may result from each beam pattern should be used by the UAV 310 at that point in time. This may then be indicated in a communications plan that may be provided to the UAV 310 in advance and used by the UAV 310 to use the appropriate beam to communicate via the network node 410 at the appropriate point on its journey along the route 320. This avoids the need for the UAV to perform the downlink synchronisation process (described above) whilst in flight that would typically be performed to determine which beam should be used.

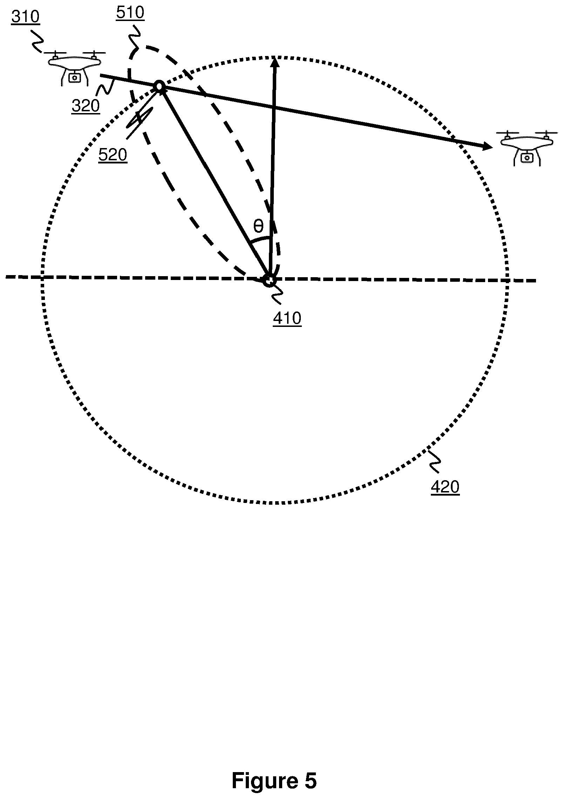

In other cases, one or more, or each, of the beam patterns in the sequence of beam patterns may define a custom beam. Figure 5 is a diagrammatic representation of a custom beam 510 for providing network coverage to a specific point 520 on the UAV's route 320 through a coverage area 420 of a network node 410. Under this approach, rather than selecting from a set of predefined beam patterns for the network node, the method 200 selects one or more points 520 on the portion of the route 320 that a network node 410 is to cover and determines a respective beam configuration for each point that will direct a beam 510 to that point. Accordingly, each of the one or more points (as well as portions of the route 320 in proximity to each point) will be optimally (or at least likely to be more optimally) covered by a beam 510.

The directing of the beam may be performed in either 2D geometry (e.g. ignoring the altitude of the UAV 310) or 3D geometry. In 2D geometry, the beam may be directed at the point having coordinates $(x_p, y_p)$ relative to the location of the network node 410 (i.e. with the network node 410 being located at the origin (0, 0) of the coordinate system) by determining a direction angle

$$\theta = arctan(\frac{x_p}{y_p})$$

. Similarly, in 3D geometry, the beam may be directed at the point having coordinates $(x_p, y_p, z_p)$ relative to the location of the network node 410 (i.e. with the network node 410 being located at the origin (0, 0, 0) of the coordinate system) by determining an elevation angle

$$\varphi = arctan(\frac{z_p}{\sqrt{x_p^2 + y_p^2}})$$

(in addition to the direction angle $\theta$).

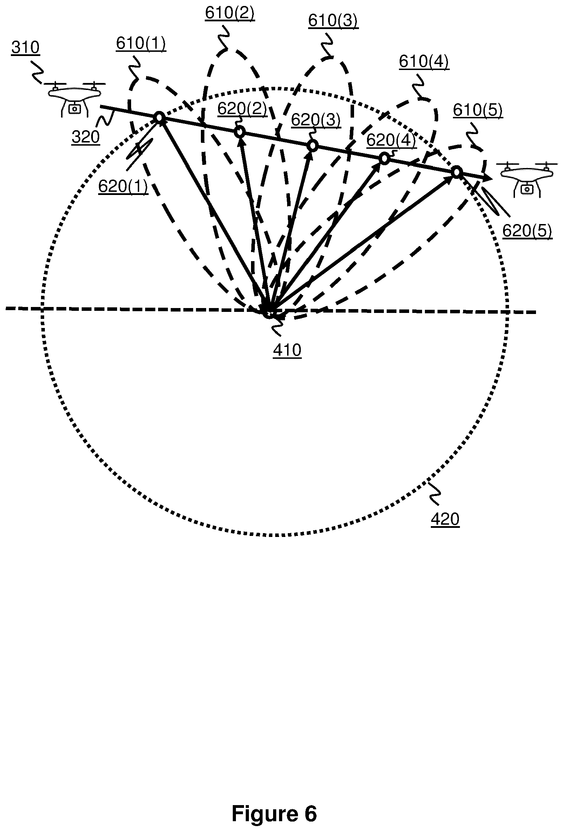

A sequence of multiple custom beams can be defined in a similar way so as to track the UAV as it travels along the entirety (or part) of the portion of the route 320 served by the network node 410. Figure 6 is a diagrammatic representation of a sequence of custom beams 610 for providing network coverage for the entirety of the UAV's route 320 through the coverage area 420 of the network node 410. The sequence of beams 610 can be determined by identifying a plurality of points 620 along the portion of the route 320 served by the network node 410 to which beams should be directed. For example, figure 6 shows a sequence of five beams 610, which are directed at five different points 620 on the portion of the route 320 within the coverage area 420 of the network node 410. In particular, a first (or initial) beam 610(1) is directed at a first (or initial) point 620(1) on the route 320, a second beam 610(2) is directed at a second point 620(2) on the route 320, a third beam 610(3) is directed at a third point 620(3) on the route 320, a fourth beam 610(4) is directed at a fourth point 620(4) on the route 320 and a fifth (or final) beam 610(5) is directed at a fifth (or final) point 620(5) on the route 320. The direction in which each beam 610 needs to be projected can be calculated as described above in relation to figure 5. Accordingly, by selecting a sequence of points 620 on the route 320 and determining a sequence of beams 610 directed at those points, the network node 410 can be provided with a beam-forming configuration which, when applied by the network node 410, causes the network node 410 to project a sequence of beams 620, one after the other, which tracks the UAV's 310 journey 320 through the area 420 covered by the network node 410 thereby improving the network coverage provided to the UAV 310.

There are various ways of selecting points 620 on the route 320 at which beams 610 in the sequence of beams should be directed. Any suitable technique for selecting the points 620 may be used. That is to say, any technique may be used which results in an appropriate distribution of points 620 along the route such that a desired level of connectivity is provided (or is likely to be provided) at all points along the portion of the route 320 covered by a network node 410. As examples, the points 620 may be selected based on one or more of a distance travelled by the UAV 310 between points, a time for the UAV 310 to travel between points and/or an angular change between points (relative to the network node 410). In some cases, the points 620 may be selected such that there is a regular distance, time or angle change (as appropriate) between each point and its preceding point.

As a first example, a sequence of points 620 on the route 320 may be selected such that each point is a predetermined distance from the preceding point. Accordingly, following this approach, the initial point 620(1) may be located at the start of the portion of the route 320 for which the network node 410 is to provide coverage. A second point 620(2) may then be determined to be located at the predetermined distance along the route 320 from the initial point 610(1). A third point 620(3) may then be determined to be located at the predetermined distance along the route 320 from the second point point 620(2), and so on until a final point 620(5) has been determined, following which, the route 320 leaves the coverage area 420 of the network node 410 (i.e. the distance from the final point 620(5) to the point at which the route 320 leaves the coverage area 420 of the network node 410 is less than the predetermined distance).

As a second example, a sequence of points 620 on the route 320 may be selected such that each point will be reached by the UAV after a predetermined period of time (or time interval) following its departure from the preceding point. This approach requires knowledge of the speed (or velocity) of the UAV 310 as it travels along the portion of the route 320 covered by the network node 410. As discussed above, this speed (or velocity) may be explicitly indicated in the mission definition file or, otherwise, may be derivable from the information contained therein. This speed can then be converted to a distance between consecutive points 620 by multiplying the speed by the predetermined time interval. Again, following this approach, an initial point 620(1) may be located at the start of the portion of the route 320 for which the network node 410 is to provide coverage. The speed of the UAV 310 at that point 620(1) may then be converted into a distance to the next point 620(2) by multiplying the speed by the predetermined time interval. The second point 620(2) may then be located that distance away from the initial point 620(1). A distance to further point 620(3) may then be determined by multiplying the speed of the UAV 310(2) at the second point 620(2) by the predetermined time interval. The third point 620(3) may then be located that distance away from the second point 620(2), and so on, until a final point 620(5) has been determined, following which, the route 320 leaves the coverage area 420 of the network node 410 (i.e. the distance from the final point 620(5) to the point at which the route 320 leaves the coverage area 420 of the network node divided by the speed of the UAV 310 at the final point 620(5) is less than the predetermined time interval).

As a third example, a sequence of points 620 on the route 320 may be selected such that there is a predetermined angular change between points (relative to the network node 410). That is to say, such that an angle between the respective beams 610 projected by the network node 410 at consecutive points 620 in the sequence is the predetermined angle. Following this approach, a set of beams may be determined by adding multiples of the predetermined angular change on to the angle of an initial beam 610(1) directed at an initial point 620(1) located at the start of the portion of the route 320 for which the network node 410 is to provide coverage. For example, a second beam direction can be determined by adding the predetermined angular change onto the angle of the initial beam 610(1), a third beam direction can be determined by adding two times the predetermined angular change onto the angle of the initial beam 610(1), and so on. Intersection points between each of the beam directions and the route can then be determined. These intersection points can then be processed in the order that they appear on the route (i.e. in the order that they would be encountered by the UAV 310 as it travels along the route) and added to the sequence of points 620. As will be appreciated, for more winding or circular routes 320, each beam direction may intersect with the route at multiple points. It is therefore possible that consecutive intersection points encountered (in the order that they appear on the route) are provided by the same beam direction. Accordingly, subsequent consecutive intersection points (in the order that they appear on the route) may be ignored until an intersection point is encountered that intersects a different beam direction from the beam direction with which the current intersection point intersects.

In some cases, the sequence of points 620 may be irregular. For example, the above techniques may be combined by specifying thresholds for a predetermined maximum distance travelled by the UAV 310 between points, a predetermined maximum time for the UAV 310 to travel between points and/or a predetermined maximum angular change between points (relative to the network node 410). Accordingly each point 620 in the sequence may be determined based on whichever of those thresholds would be breached first. That is to say, the distance between some consecutive pairs of points in the sequence 620 may be selected such to be the predetermined maximum distance, whilst other consecutive pairs of points may be selected such that the predetermined maximum time for the UAV 310 to travel between those points is not exceeded (e.g. where the UAV 310 is travelling slower meaning that the predetermined maximum distance would not be exceed in that time). Similarly, other consecutive pairs of points in the sequence 620 may be selected such that the predetermined maximum angular change is not exceeded (e.g. where the UAV 310 is travelling in a straight line closer to the network node 410 such that comparatively large angular changes in beam direction from the network node 410 result from relatively short distances travelled such that the predetermined maximum distance and/or time would not have been exceeded).

In addition, or as an alternative, to the above techniques, the selection of the points 620 on the route 320 at which beams 610 in the sequence of beams should be directed may be based (at least in part) on a respective prediction of network connectivity (or strength) along the route 320 for each of the resulting beams 610. For example, a prediction of the network connectivity along the route 320 provided by the initial beam 610(1) directed at the initial point 620(1) may be used to identify a point along the route at which the network connectivity drops below a predetermined threshold. The second point 610(2) may then be located at that point and the process repeated for a second beam directed at the second point 610(2). That is to say, a prediction of the network connectivity along the route 320 provided by the second beam 620(2) may be made and used to identify a further point along the route after the second point 610(2) at which the network connectivity provided by the second beam 620(2) drops below a predetermined threshold. The third point 610(3) may then be located at that point and the process repeated until a final point 620(5) has been determined, following which, the route 320 leaves the coverage area 420 of the network node 410 (i.e. the network coverage provided by the final beam 610(5) aimed at the final point 610(5) provides at least the predetermined threshold level of connectivity for the remainder of the route 320 until it leaves the coverage area 420 of the network node 410). Where network requirements of the UAV 310 have been specified in the mission definition file, the predetermined threshold may be the required level of network coverage specified for each point along the route 320. Otherwise, the acceptable level of network coverage may be a predetermined minimum level of network coverage.

Although these examples, have predominantly discussed the determination of a beam pattern in the context of a single beam directed toward the UAV 310, it will be appreciated that each beam pattern may comprise additional beams not directed at the UAV 310. These additional beams may, for example, be determined so as to accommodate the needs of other network users, as will be appreciated by those skilled in the art. Additionally, in some cases, beam patterns in the sequence of beam patterns may overlap. That is to say, the beam-forming configuration may indicate that a network node 310 should emit the beams according to two consecutive beam patterns in the sequence simultaneously for a certain period of time. This overlap may aid in the transition as the UAV moves from the portion of the route 320 associated with the current beam pattern to that associated with the next beam pattern and may also accommodate some uncertainty or variation in the precise progress of the UAV 320 along the route.

Similarly, in the above examples, the initial point 610(1) has been discussed as being located at the start of the portion of the route 320 for which the network node 410 is to provide coverage. However, it will be appreciated, that the initial point 610(1) need not be at the very start of the portion of the route 320 for which the network node 410 is to provide coverage (i.e. at the intersection between the route 320 and the coverage area 420 of the network node 410). Indeed, provided that the initial point 610(1) is substantially near to the start of the portion of the route 320 for which the network node 410 is to provide coverage, then an initial beam 620(1) directed at the initial point 610(1) will still provide adequate coverage to the start of the portion of the route 320 for which the network node 410 is to provide coverage. In some cases, therefore, the location of the initial point 610(1) may be determined to be a point that is furthest along the route 320 for which a beam 620 directed at that point is predicted to provide an acceptable level of network coverage to the start of the portion of the route 320 for which the network node 410 is to provide coverage. Again, where network requirements of the UAV 310 have been specified in the mission definition file, the acceptable level of network coverage may be the required level of network coverage specified for the start of the portion of the route 320 for which the network node 410 is to provide coverage. Otherwise, the acceptable level of network coverage may be a predetermined minimum level of network coverage.

Having determined a set of beam-forming configurations for one or more, or all, of the network nodes 410, the method 200 proceeds to an operation 240.

At operation 240, the method 200 configures the one or more, or all, of the network nodes 410 according to the respective beam-forming configuration that was determined for that node 410. For example, the method 200 may provide each beam-forming configuration to a respective controller that is responsible for configuring the network node 410 associated with that configuration. The controller may then use beam-forming configuration to cause the respective network node 410 to communicate using beams 620 according to the beam patterns indicated in the beam-forming configuration at an appropriate time (e.g. when the UAV 310 will be travelling along the portion of the route 320 associated with each beam pattern). As discussed above, in some cases the beam-forming configuration may explicitly indicate the times at which each beam pattern is to be used. In such cases, the controller may configure the network node 410 to adopt the beam pattern at those times. In other cases, the beam-forming configuration may implicitly convey those times, either as relative times (e.g. relative to the start time for the mission) or by indicating the specific geometry of the route to which the beam-forming configuration applies. Accordingly, the controller may utilise other information in order to determine when each beam-pattern should be applied. For example, the controller may receive a notification of an actual start time for the mission and use that together with the relative times indicated in the beam-forming configuration to determine when to use each beam pattern. As another example, the controller may refer to the schedule indicated in the mission definition file together with a geometrical indication of the portion of the route associated with each beam pattern in the beam-forming configuration to determine when to each beam pattern. In some cases, the controller may additionally be configured to receive updates as to the actual progress of the UAV 310 on the mission 300. These updates may be used by the controller to adjust the timings at which each of the beam patterns is used. That is to say, the updates enable the controller to determine a time difference between the UAVs 310 scheduled progress on the mission 300 (indicated in the mission definition file) and its actual progress. The timings for using each beam pattern can then be adjusted by that time difference to accommodate the UAVs 310 actual progress on the mission 300.

Having configured one or more, or all, of the network nodes 410 according to the respective beam-forming configuration that was determined for that node 410, the method 200 ends.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above-described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer-implemented method of configuring a network to provide network coverage for a mobile entity undertaking a mission, the method comprising:

   receiving a mission definition file for the mobile entity, the mission definition file indicating a route along which the mobile entity will travel when undertaking the mission and a schedule for the mission;
   identifying a set of network nodes of the network for providing coverage to the mobile entity during the mission, each network node being associated with a respective portion of the route over which it is to provide network coverage to the mobile entity;
   determining a set of beam-forming configurations for one or more, or all, of the network nodes based on the mission definition file, each beam-forming configuration being associated with a respective network node and indicating a sequence of beam patterns for providing network coverage to the mobile entity as it travels along the respective portion of the route to be covered by that network node; and
   configuring the one or more, or all, of the network nodes according to the respective beam-forming configuration associated with that node to cause each network node to form a beam according to the sequence of beam patterns while the mobile entity travels along the respective portion of the route covered by that network node.

2. The method of claim 1, wherein:

   the mission definition file further indicates a respective network requirement for the mobile entity during one or more portions of the route;
   the method further comprises determining whether a respective current configuration of each of the identified network nodes is able to satisfy the network requirements for the mobile entity as it travels along the respective portion of the route to be covered by that network node; and
   determining the set of beam-forming configurations comprises determining a beam-forming configuration for each network node for which it is determined that the respective current configuration is not able to satisfy the network requirements for the mobile entity as it travels along the respective portion of the route to be covered by that network node, such that the network requirements for the mobile entity are met.

3. The method of claim 2, wherein the respective network requirements for the one or more portions of the route are implicitly indicated by one or more respective sensor requirements for the mobile entity during each of the one or more portions of the route.

4. The method of any one of claims 1 to 3, wherein at least one of the beam-forming configurations is determined further based on network requirements of another mobile entity that will be using the respective network nodes associated with each of the at least one of the beam-forming configurations contemporaneously with the mobile entity.

5. The method of any one of the preceding claims, wherein each beam pattern is one of a static set of predefined beam patterns for the respective network node.

6. The method of claim 5, further comprising providing a communications plan to the mobile entity, the communications plan indicating a respective specific beam of each beam pattern in the sequence of beam patterns that is to be used by the mobile entity while travelling along the respective portion of the route to be covered by each network node.

7. The method of any one of claims 1 to 4, wherein each beam pattern in the sequence of beam patterns defines a custom beam directed at a location on the route covered by the network node.

8. The method of any one of the preceding claims, wherein the mobile entity is an unmanned aerial vehicle.

9. A computer system comprising a processor and a memory storing computer program code for performing the steps of any one of claims 1 to 8.

10. A computer program comprising instructions which, when executed by a computer, cause the computer to carry out the method of any one of claims 1 to 8.

11. A computer-readable data carrier having stored thereon the computer program of claim 10.

12. A data carrier signal carrying the computer program of claim 10.

13. A network comprising a plurality network nodes for providing network coverage across a geographic area, the network comprising a controller arranged to configure one, or more, or all of the network nodes so as to provide network coverage for a mobile entity undertaking a mission by carrying out the method of any one of claims 1 to 8.

100

Bus
108

Storage
102

Processor
104

Input/Output Interface
106

Keyboard
110a

Mouse
110b

Display
110c

Network
112

**Figure 1**

200

**START**

210 — Receive mission plan for mobile entity

220 — Identify network nodes for communication with mobile entity

230 — Determine beam-forming configurations for network nodes for this communication

240 — Configure the network nodes to use the beam-forming configurations during the mission

**STOP**

**Figure 2**

**Figure 3**

**Figure 4**

**Figure 5**

**Figure 6**

Europäisches Patentamt
European Patent Office
Office européen des brevets

# EUROPEAN SEARCH REPORT

**Application Number**

EP 24 17 0850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 714 982 A (CHINA TELECOM CO LTD) 24 February 2023 (2023-02-24) * page 10 - page 20; figures 2, 4 * ----- | 1-13 | INV. G08G5/00 H04B7/185 |
| A | CN 116 257 089 A (UNIV NANJING AERONAUTICS & ASTRONAUTICS) 13 June 2023 (2023-06-13) * page 2 - page 4 * * page 10 - page 12 * ----- | 1-13 | |
| A | CN 115 913 302 A (UNIV XIDIAN) 4 April 2023 (2023-04-04) * page 5 - page 9; figure 2 * ----- | 1-13 | |

**TECHNICAL FIELDS SEARCHED (IPC)**

G08G
H04B
H04W

The present search report has been drawn up for all claims

| Place of search | Date of completion of the search | Examiner |
|---|---|---|
| Berlin | 30 September 2024 | Kalabic, Faris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 0850

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | | Publication date | Patent family member(s) | Publication date |
|---|---|---|---|---|
| CN 115714982 | A | 24-02-2023 | NONE | |
| CN 116257089 | A | 13-06-2023 | NONE | |
| CN 115913302 | A | 04-04-2023 | NONE | |

EPO FORM P0459

For more details about this annex : see Official Journal of the European Patent Office, No. 12/82